# EUROPÄISCHE PATENTSCHRIFT

(11) **EP 1 538 044 B1**
(45) Veröffentlichungstag und Bekanntmachung des Hinweises auf die Patenterteilung: **22.08.2007**
(21) Anmeldenummer: 04027453.2
(22) Anmeldetag: 18.11.2004
(51) Int. Cl.: B60T 13/14, B60T 7/20

(54) **Hydraulische Anhängerbremseinrichtung**
Hydraulic trailer brake device
Dispositif hydraulique de frein de remorque

(30) Priorität: 01.12.2003 DE 10355955
(43) Veröffentlichungstag der Anmeldung: 08.06.2005
(73) Patentinhaber: Bosch Rexroth AG, 70184 Stuttgart (DE)
(72) Erfinder: Lödige, Heinrich, 71665 Vaihingen (DE); Rusbült, Rene, 71701 Schwieberdingen (DE); Trucksess, Rainer, 71665 Vaihingen (DE)
(74) Vertreter: Winter, Brandl, Fürniss, Hübner Röss, Kaiser, Polte Partnerschaft Patent- und Rechtsanwaltskanzlei

(56) Entgegenhaltungen:
- DE-A1- 3 737 579
- DE-A1- 10 124 303
- DE-A1- 19 857 355
- DE-A1- 19 955 797
- US-A- 3 836 205
- US-A- 5 588 716
- US-A- 5 806 937

## Beschreibung

Die Erfindung betrifft eine hydraulische Anhängerbremseinrichtung gemäß dem Oberbegriff des Patentanspruches 1.

Land- oder forstwirtschaftliche Anhänger von Zugfahrzeugen, beispielsweise von Traktoren werden üblicherweise über ein Anhängerbremsventil gebremst, das von einer Verstellpumpe einer Zentraleinheit mit Druckmittel versorgt wird. Dabei wird ein Zugfahrzeugbremsdruck mittels des Anhängerbremsventils auf ein anderes, genormtes Druckniveau für den Anhänger gebracht. Die Ansteuerung des Anhängerbremsventils wird dabei in Abhängigkeit von einem Pilotdruck, der dem Zugfahrzeugbremsdruck entspricht durchgeführt. Die Signalübertragung von der Fahrzeugbremse zum Anhängerbremsventil erfolgt in der Regel mittels des Mediums der Fahrzeugbremse. Arbeitet die Fahrzeugbremse mit Bremsflüssigkeit ist eine Medientrennung im Ansteuerkopf des Anhängerbremsventils vorzunehmen, da die Anhängerbremsanlage in der Regel mit Mineralöl aus der Zentralhydraulik gespeist wird, das nicht in Kontakt mit der Bremsflüssigkeit kommen darf.

Das Dokument US 3836205 beschreibt den Oberbegriff des Anspruchs 1.

Eine derartige herkömmliche Lösung ist beispielsweise aus der DE 198 57 355 A1 bekannt, wobei der Zugfahrzeugbremsdruck in einem Steuerkopf des Anhängerbremsventils anliegt und ein Steuerschieber des Anhängerbremsventils in Abhängigkeit von diesem Pilotdruck in eine Regelposition verschoben wird, in der ein Bremsdruck zum Abbremsen des Anhängers aufgebaut wird. Die Bremsanlage des Anhängers ist mit einem Federsystem ausgeführt, das sicherstellt, dass bei abgehängtem Anhänger die Anhängerbremse einrückt. Eine zusätzliche Parkbremse kann durch Ansteuerung eines Elektromagneten betätigt werden.

Eine derartige Anhängerbremseinrichtung mit bei abgehängtem Anhänger einrückender Anhängerbremse wird auch als "Italienisches System" bezeichnet. Im Unterschied dazu wird bei einem so genannten "Französischen System" die Anhängerbremse beim Abhängen des Anhängers nicht betätigt, so dass dieser frei verschiebbar ist, solange die Parkbremse nicht betätigt wird.

In der DE 37 37 579 C2 ist eine Anhängerbremseinrichtung mit dem gleichen Prinzipaufbau wie die obige Lösung gezeigt, wobei durch ein Prioritätsventil dafür gesorgt ist, dass das die Anhängerbremseinrichtung gegenüber nachgeordneten Verbrauchern von der Zentralhydraulik des Zugfahrzeuges bevorzugt mit Druckmittel versorgt wird. Diese bekannte Anhängerbremseinrichtung zeigt im Prinzip die gleichen Nachteile wie die vorbeschriebene Lösung, da auch bei dieser Konstruktion die Ansteuerung des Anhängerbremsventils durch einen Pilotdruck erfolgt, der am Zugfahrzeugbremskreis abgegriffen wird, so dass auch hier die Problematik der Trennung der Medien vorliegt.

Beide bekannten Varianten sind nur mit hohem Aufwand an die unterschiedlichen Systeme (Französisches/Italienisches System) anpassbar. Ein weiterer Nachteil der bekannten Systeme besteht darin, dass aufgrund der vorbeschriebenen hydraulischen Anbindung des Anhängerbremsventils an den Bremskreis des Zugfahrzeuges auch bei Fahrten ohne Anhänger das Anhängerbremsventil angesteuert wird, so dass entsprechend die Hydraulikpumpe der Zentraleinheit bei jedem Bremsvorgang auf Druck geht.

Demgegenüber liegt der Erfindung die Aufgabe zugrunde, eine einfach aufgebaute Anhängerbremseinrichtung zu schaffen, die mit geringem Aufwand an die unterschiedlichen Bremssysteme anpassbar ist.

Diese Aufgabe wird durch eine hydraulische Anhängerbremseinrichtung mit den Merkmalen des Patentanspruches 1 gelöst.

Erfindungsgemäß erfolgt die Ansteuerung des Anhängerbremsventils mittelbar oder unmittelbar über ein Steuersignal, das von einer elektrischen Steuereinheit in Abhängigkeit von dem Zugfahrzeugbremsdruck generiert wird. D.h. der Bremskreis des Zugfahrzeuges ist hydraulisch nicht mit dem Druckmittelkreislauf der Anhängerbremseinrichtung verbunden, so dass die eingangs beschriebene Medientrennung nicht erforderlich ist. Dadurch lässt sich der Aufbau des Anhängerbremsventils gegenüber den herkömmlichen Lösungen wesentlich vereinfachen.

Das von der elektrischen Steuereinheit abgegebene Steuersignal kann durch Einspeichern geeigneter Kennlinien im weiten Umfang angepasst werden, so dass die vorbeschriebenen nationalen Bremssysteme oder besondere Betriebszustände durch einfache Umprogrammierung im wesentlichen ohne Änderung der Hydraulikhardware realisierbar sind.

So lässt sich beispielsweise der Beladezustand des Anhängers über geeignete Sensoren erfassen und in Abhängigkeit von diesem Ladezustand eine Kennlinie vorgeben, über die ein höherer Bremsdruck für den Anhänger aufgebaut wird, als es bei unbeladenem Anhänger der Fall wäre.

Bei einem bevorzugten Ausführungsbeispiel der Erfindung ist dem Anhängerbremsventil ein Druckventil, vorzugsweise ein elektrisch gesteuertes Druckminderventil zugeordnet, das in Abhängigkeit von dem Steuersignal der elektronischen Steuereinheit angesteuert wird. Über dieses Druckminderventil wird der Systemdruck der Zentraleinheit auf einen Steuerdruck reduziert, der eine in Bremsdruckaufbaurichtung wirksame Steuerfläche eines Steuerschiebers des Anhängerbremsventils beaufschlagt. Durch dieses Druckminderventil entfällt die Notwendigkeit, eine Druckbegrenzung am Anhängerbremsventil vorzusehen.

Der Steuerschieber des Anhängerbremsventils wird in Bremsdruckaufbaurichtung mittelbar oder unmittelbar vom Steuerdruck und ggfs. von der Kraft einer Feder und in Bremsdruckabsenkrichtung von dem Bremsdruck beaufschlagt. Dabei ist es bevorzugt, wenn die in Bremsdruckabsenkrichtung wirksame Steuerfläche kleiner als die in Gegenrichtung wirksame Steuerfläche ist.

Der genannte Steuerdruck kann direkt auf die in Bremsdruckaufbaurichtung wirksame Steuerfläche wirken oder aber auch auf die in gleicher Richtung wirksame Feder, um deren Vorspannung zu ändern.

Die Druckmittelversorgung der Anhängerbremseinrichtung über die Zentraleinheit lässt sich optimieren, wenn dem Anhängerbremsventil ein Prioritätsventil vorgeschaltet ist, über das bei einer Unterversorgung die Druckmittelversorgung nachgeschalteter Verbraucher zurückgefahren oder unterbrochen wird.

Vorteilhafterweise ist die Steuereinheit so programmiert, dass sie bei abgehängtem Anhänger den Bremsdruck abschaltet, so dass die Verstellpumpe nicht unnötig belastet wird. Die Anhängerbremsventilanordnung ist besonders kompakt aufgebaut, wenn das Druckminderventil koaxial zum Anhängerbremsventil angeordnet ist.

Die erfindungsgemäße Anhängerbremseinrichtung lässt sich bei LS-Systemen und Open-Center-Systemen einsetzen.

Sonstige vorteilhafte Weiterbildungen der Erfindung sind Gegenstand weiterer Unteransprüche.

Im folgenden wird ein bevorzugtes Ausführungsbeispiel der Erfindung anhand schematischer Zeichnungen näher erläutert. Es zeigen:
Figur 1 ein Funktionsschaubild einer erfindungsgemäβen Anhängerbremseinrichtung;
Figur 2 ein Schaltbild der wesentlichen hydraulischen Bauelemente der Anhängerbremseinrichtung 1 aus Figur 1 und
Figur 3 eine Prinzipdarstellung einer Ventilanordnung, mit der die Schaltung gemäß Figur 2 realisiert ist.

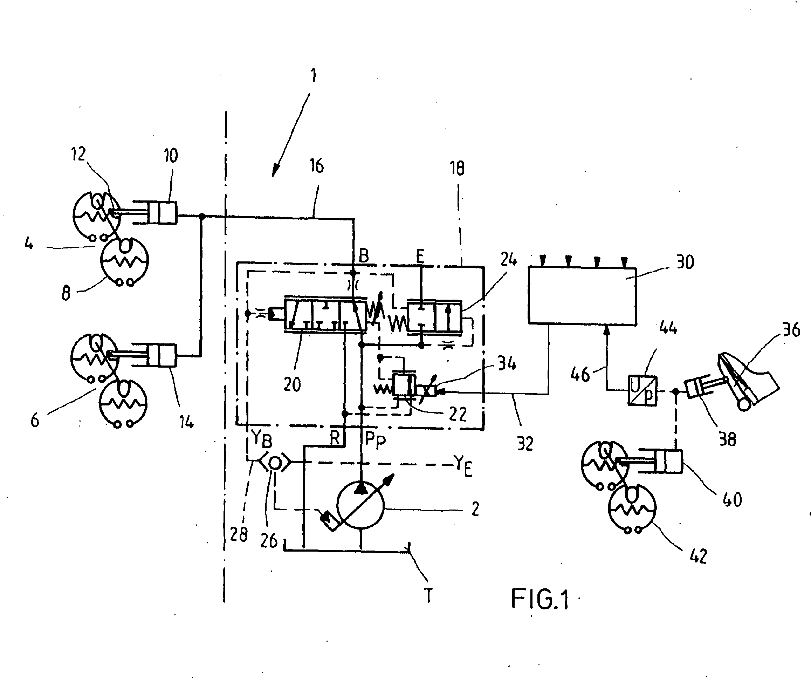

In Figur 1 ist ein Funktionsschema einer Anhängerbremseinrichtung 1 eines land- oder forstwirtschaftlichen Anhängers dargestellt, der an einen Traktor angehängt werden muss. Dieser Traktor ist mit einer Zentralhydraulik versehen, die als Closed-Center-Load-Sensing-Hydroanlage (CCLS) ausgeführt ist. Über diese Zentralhydraulik können hydraulische Verbraucher des Traktors und des Anhängers mit Druckmittel von einer Verstellpumpe 2, beispielsweise einer Axialkolbenpumpe versorgt werden. Die Verbraucher können beispielsweise die Komforthydraulik (Getriebeschaltung, Steuerölkreis), eine Anhängerbremse, die Lenkhydraulik und die Hubwerks- und Arbeitshydraulik sein. Bei dem in Figur 1 dargestellten Ausführungsbeispiel ist lediglich der Hydraulikkreis für die Anhängerbremseinrichtung 1 dargestellt.

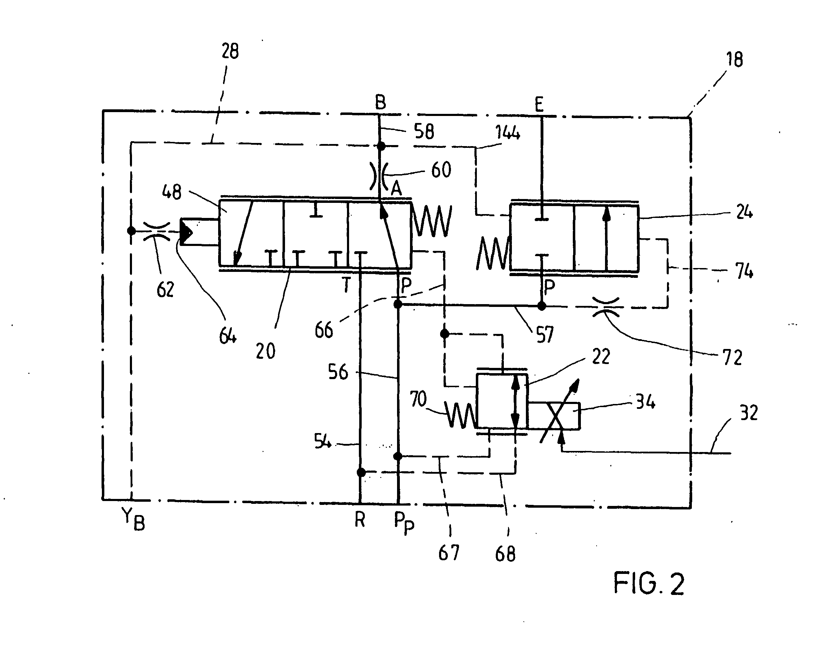

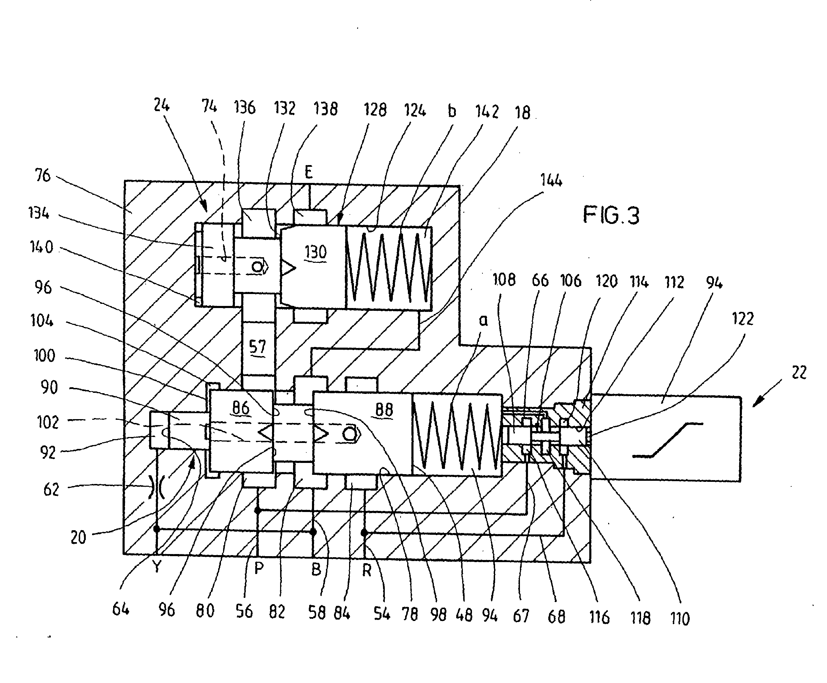

Der Anhänger des dargestellten Ausführungsbeispiels soll zwei Achsen 4, 6 haben, die jeweils mit zwei Bremstrommeln 8 versehen sind, deren Bremsbacken von Bremszylindern 10, 14 über einen Hebelmechanismus 12 betätigbar sind. Die Druckmittelversorgung der beiden Bremszylinder 10, 14 erfolgt über eine sich verzweigende Bremsleitung 16, die an einem Bremsanschluss B einer strichpunktiert angedeuteten Anhängerbremsventilanordnung 18 angeschlossen ist. Diese besteht im wesentlichen aus einem Anhängerbremsventil 20, einem Druckminderventil 22 und einem Prioritätsventil 24, über das zusätzliche Hydraulikkreise, beispielsweise die Hubwerkshydraulik, die Arbeitshydraulik, die Komforthydraulik über einen Verbraucheranschluss E mit Druckmittel versorgbar sind. Einzelheiten der Anhängerbremsventilanordnung werden anhand der Figuren 2 und 3 erläutert.

Die Verstellpumpe 2 wird in Abhängigkeit vom höchsten Lastdruck der angeschlossenen hydraulischen Verbraucher angesteuert, wobei dieser Lastdruck über eine Wechselventilanordnung 26 (in Figur 1 nur ein Wechselventil dargestellt) und Lastmeldeleitungen 28 an dem am höchsten belasteten Verbraucher, d.h. beim dargestellten Ausführungsbeispiel am Bremsanschluss B oder an dem an den Verbraucheranschluss E angeschlossenen hydraulischen Verbraucher abgegriffen wird. Die Verstellpumpe 2 ist an einen Druckanschluss P und ein Tankanschluss T an einen Rücklaufanschluss R der Anhängerbremsventilanordnung 18 angeschlossen. Über das Druckminderventil 22 kann der von der Pumpe abgegebene Druck auf einen Steuerdruck reduziert werden, über den das Anhängerbremsventil 20 in Bremsdruckaufbaurichtung verschiebbar ist. Die Ansteuerung des elektrisch betätigbaren Druckminderventils 22 erfolgt über eine elektronische Steuereinheit 30, die in Abhängigkeit vom Bremsdruck des Zugfahrzeuges und anderen Parametern, auf die im folgenden noch näher eingegangen wird, ein Steuersignal für das Druckminderventil 22 erzeugt.

In der elektronischen Steuereinheit 30 sind Kennlinien abgelegt, die es ermöglichen, in Abhängigkeit von unterschiedlichen Betriebszuständen ein geeignetes Steuersignal zu Ansteuerung der Anhängerbremsventilanordnung 18 zu generieren, das über eine Signalleitung 32 an einen Proportionalmagneten 34 des Druckminderventils 22 angelegt wird. Beim dargestellten Ausführungsbeispiel wird das Steuersignal u.a. in Abhängigkeit vom Bremsdruck im Bremskreis des Zugfahrzeuges von der elektronischen Steuereinheit 30 berechnet. Dieser Zugfahrzeugbremskreis ist in Figur 1 schematisch mit einem Bremspedal 36, einem über das Bremspedal 36 betätigten Bremsdruckgeber 38 und einem Bremszylinder 40 für die Bremsen 42 des Zugfahrzeuges dargestellt. Der Zugfahrzeugbremsdruck wird über einen Drucksensor 44 erfasst und die diesen Druck entsprechende Spannung als Eingangssignal über eine Drucksignalleitung 46 an den Eingang der elektronischen Steuereinheit 30 angelegt.

Wie erwähnt, können in die Generierung des Steuersignals neben dem Zugfahrzeugbremsdruck auch weitere Parameter eingehen. Beispielsweise kann die Beladung des Anhängers - zum Beispiel durch Messen des Einfederwegs am Anhänger - berücksichtigt werden, indem bei beladenem Anhänger eine Bremskraftverstärkung durchgeführt wird. Bei abgehängtem Anhänger kann die Anhängerbremseinrichtung ausgeschaltet werden, so dass die Verstellpumpe 2 nicht unnötig belastet wird; es kann bei minimalen Anpassungen der Hardware und/oder Software zwischen dem eingangs beschriebenen "Italienischen System" und dem "Französischen System" umgeschaltet werden. Selbstverständlich können auch weitere, fahrdynamische Parameter, etc. in die Generierung eines Steuersignals in Abhängigkeit von den erfassten Messgrößen (Zugfahrzeugbremsdruck, Gewicht des Anhängers, Fahrgeschwindigkeit, Bergauffahrt, Bergabfahrt etc.) eingehen.

Figur 2 zeigt das hydraulische Schaubild der Anhängerbremsventilanordnung 18 aus Figur 1.

Demgemäß ist das Anhängerbremsventil 20 als proportionalverstellbares Wegeventil mit einem Druckanschluss P, einem Tankanschluss T und einem Ausgangsanschluss A ausgeführt. Ein Steuerschieber 48 des Anhängerbremsventils 20 ist über eine Feder a in seine dargestellte Grundposition vorgespannt.

Bei dem dargestellten Ausführungsbeispiel ist der Tankanschluss T über einen Ablaufkanal 54 mit dem Rücklaufanschluss R und der Druckanschluss P über einen Pumpenkanal 56 mit dem Pumpenanschluss P verbunden, über den die Verstellpumpe 2 angeschlossen ist.

Vom Pumpenkanal 56 zweigt ein Verbraucherkanal 57 ab, der zu einem Eingang P des Prioritätsventils 24 führt. Der Arbeitsanschluss A des Anhängerbremsventils 20 ist durch einen Bremskanal 58 mit dem Bremsanschluss B verbunden. In diesem Bremskanal 58 ist eine Blende 60 zur Begrenzung des maximalen Druckmittelstromes vorgesehen.

In der Grundposition des Steuerschiebers 48 ist der Druckanschluss P mit dem Arbeitsanschluss A verbunden, so dass die Anhängerbremseinrichtung von der Verstellpumpe 2 mit Druckmittel versorgt wird. Die Verbindung zum Tankanschluss T ist abgesperrt. In einer mittleren Position des Steuerschiebers 48 sind alle drei Anschlüsse A, P, T gegeneinander abgesperrt und bei einem weiteren Verschieben des Steuerschiebers 48 nach links wird der Druckanschluss P zugesteuert und die Verbindung zwischen dem Arbeitsanschluss A und dem Tankanschluss T aufgesteuert, so dass die Anhängerbremsanlage druckentlastet wird.

Der im Bremskanal 58 wirksame Druck wird über die eingangs genannte Lastmeldeleitung 28 abgegriffen und über eine Dämpfungsdrossel zu einer in Figur 2 linken Stirnfläche 64 des Ventilschiebers 48 geführt. Diese Stirnfläche 64 hat eine geringere Fläche als die in Figur 2 rechte Steuerfläche des Steuerschiebers 48, an der die Feder a angreift. Diese in Druckaufbaurichtung wirksame Steuerfläche wird zusätzlich zur Kraft der Feder a durch einen Steuerdruck beaufschlagt, der über einen Steuerdruckkanal 66 von einem Ausgangsanschluss A des Druckminderventils 22 abgegriffen wird. Ein Druckanschluss P des Druckminderventils 22 ist über einen Steuerkanal 67 mit dem Pumpenkanal 56 und über einen Tankkanal 68 mit dem Ablaufkanal 54 verbunden. Der Ventilkörper des Druckminderventils ist über eine Regelfeder 70 in eine Grundposition vorgespannt, in der der Ausgangsanschluss A mit dem Tankanschluss T verbunden ist, während der Druckanschluss P abgesperrt ist, so dass die in Figur 2 rechte Stirnfläche des Steuerschiebers 48 mit dem Tankdruck beaufschlagt ist.

Der Ventilkörper des Druckminderventils 22 ist neben der Kraft der Regelfeder 70 zusätzlich noch durch den im Steuerdruckkanal 66 wirksamen Druck in Richtung der dargestellten Grundposition beaufschlagt. Der Ventilkörper des Druckminderventils 22 lässt sich gegen die Kraft der Regelfeder 70 durch den Proportionalmagneten 34 verschieben, wobei der Hub in Abhängigkeit von dem von der elektronischen Steuereinheit 30 generierten Steuersignal erfolgt, das über die Signalleitung 32 angelegt wird. Bei Ansteuerung des Elektromagneten 34 wird die Verbindung von P nach A geöffnet, wobei sich der Ventilkörper in eine Regelposition einstellt, die von der Kraft des Proportionalmagneten 34 einerseits und andererseits von der Kraft der Regelfeder 70 und von dem im Steuerdruckkanal 66 wirksamen Steuerdruck abhängt. In dieser Regelposition wird der von der Pumpe abgegebene Druck, der bei Traktoren im Bereich von über 200 bar liegen kann, auf einen Steuerdruck reduziert, der im Bereich von 0 bis 20 bar liegt. Dieser Steuerdruck beaufschlagt die in Figur 2 rechte Stirnfläche des Steuerschiebers 48 dann zusätzlich zur Kraft der Feder a in Bremsdruckaufbaurichtung. Die Verstellpumpe 2 fördert Druckmittel über das Anhängerbremsventil 20 und den Bremsanschluss B zu den Bremszylindern 10, so dass entsprechend ein Bremsdruck aufgebaut wird. Dieser Bremsdruck wird über die LS-Leitung 28 abgegriffen und zu der kleineren Stirnfläche 64 des Ventilschiebers 48 geführt, so dass dieser durch den Bremsdruck in Richtung einer Öffnung der Verbindung von B nach T beaufschlagt ist. Der Steuerschieber 48 stellt sich in eine Regelposition ein, in der der Bremsdruck der Anhängerbremseinrichtung 1 in Abhängigkeit von dem Steuersignal der elektronischen Steuereinheit 30 erzeugt wird. Beim Loslassen der Fahrzeugbremse wird das Druckminderventil 22 wieder in seine dargestellte Grundposition zurückgefahren, so dass die in Figur 2 rechte Steuerfläche des Ventilschiebers 48 entlastet wird. Dieser wird dann durch den Bremsdruck gegen die Kraft der Feder a nach rechts verschoben, so dass die Verbindung von A nach T des Anhängerbremsventils 20 aufgesteuert und der Bremsdruck zum Tank T hin abgebaut wird, bis er einen minimalen Bremsdruck erreicht, der äquivalent zur Kraft der Feder a ist. Bei diesem Mindestdruck ist die beispielsweise mit einem Federsystem gemäß der DE 198 57 355 A1 ausgeführte Anhängerbremseinrichtung gelöst, so dass die Bremsbacken nicht einrücken. Bei Unterschreiten dieses Mindestdruckes, beispielsweise bei einer Störung oder bei abgehängtem Anhänger rückt die Anhängerbremse selbsttätig ein ("Italienisches System"). Zur Realisierung eines "Französischen Systems" wird die Feder a sehr schwach ausgelegt oder ganz weggelassen und das Steuersignal der Steuereinheit entsprechend angepasst, so dass nur bei Betätigen der Zugfahrzeugbremse ein Bremsdruck aufgebaut wird. Prinzipiell könnte auch beim "Italienischen System" auf die Feder a verzichtet werden, wobei die Federkraft dann durch einen entsprechenden Steuerdruck ersetzt wird, der auch bei nicht betätigter Zugfahrzeugbremse von der Steuereinheit 24 generiert wird.

Das in Figur 2 dargestellte Prioritätsventil 24 ist in Richtung seiner federvorgespannten Schließposition durch den Druck in der LS-Leitung 28 und in Richtung seiner Öffnungsposition durch den Druck im Verbraucherkanal 57 beaufschlagt, der über eine weitere Dämpfungsdrossel 72 und einen Steuerkanal 74 abgegriffen wird. Durch das Prioritätsventil 24 ist sichergestellt, dass bei einer Unterversorgung der Verbraucher, d.h. bei einer auf Maximalförderung verstellten Verstellpumpe 2, die Anhängerbremseinrichtung 1 mit Druckmittel versorgt wird, während untergeordnete Verbraucher, beispielsweise die Komforthydraulik oder die Hubwerkshydraulik mit einem verringerten Druckmittelvolumenstrom versorgt werden, so dass stets eine hinreichende Bremswirkung für den Anhänger gewährleistet ist.

Figur 3 zeigt den Grundaufbau einer gerätetechnischen Lösung, mit der das Schaltbild gemäß Figur 2 realisiert ist.

Das Anhängerbremsventil 20, das Prioritätsventil 24 und das Druckminderventil 22 sind in einer gemeinsamen Ventilscheibe 76 aufgenommen. An dieser sind der Druckanschluss P, der Bremsanschluss B, der Rücklaufanschluss R, der zusätzliche Verbraucheranschluss E sowie ein LS-Anschluss Y angeordnet. Der Steuerschieber 48 des Anhängerbremsventils 20 ist in einer Ventilbohrung 78 geführt, die zu drei axial hintereinander liegenden Ringräumen 80, 82, 84 erweitert ist. Der Ringraum 80 ist über den Verbraucherkanal 56 mit dem Druckanschluss P, der Ringraum 82 über den Bremskanal 58 mit dem Bremsanschluss B und der dritte Ringkanal 84 über den Ablaufkanal 54 mit dem Rücklaufanschluss R verbunden. Der Ventilschieber 48 hat zwei axial zueinander beabstandete Ringbünde 86, 88 und an der in Figur 3 linken Stirnfläche des Ringbundes 86 ist ein Axialvorsprung 90 vorgesehen, der mit einem radial zurückgesetzten Abschnitt einen Steuerraum 92 begrenzt, der über die Dämpfungsdrossel 62 mit dem LS-Anschluss Y verbunden ist. An der rechten Stirnfläche des Ringbundes 88 greift die in einem Federraum 94 aufgenommene Feder a an.

Durch die beiden Ringbünde 86, 88 sind mit Feinsteuerkerben versehene Steuerkanten 96, 98 ausgebildet, wobei in der dargestellten Grundposition die Verbindung vom Ringraum 80 zum Ringraum 82 durch die Steuerkante 96 geöffnet ist, während die Steuerkante 98 die Verbindung vom Ringraum 82 zum Ringraum 84 absperrt, d.h. der Druckanschluss P ist mit dem Bremsanschluss B verbunden und der Rücklaufanschluss R abgesperrt.

Die in Figur 3 linke Ringstirnfläche 100 begrenzt einen Stirnflächenraum 104 der Ventilbohrung 78, der über eine Winkelbohrung 102 des Steuerschiebers 48 mit dem Ringraum 84 verbunden ist, so dass der Stirnflächenraum 104 zum Tank T hin entlastet ist.

Das Druckminderventil 22 hat einen etwa symmetrischen Ventilkörper 106 mit zwei endseitigen Steuerbünden 108, 110, der in einer Axialbohrung 112 einer in die Ventilscheibe 76 eingesetzten Ventilbuchse 114 axial verschiebbar geführt ist. Die Axialbohrung 112 ist in Radialrichtung zu drei nebeneinander angeordneten Räumen 116, 118, 120 erweitert, wobei der Raum 116 über den Steuerkanal 67 mit dem Pumpenkanal 56, der Raum 118 über den Steuerdruckkanal 66 mit dem Federraum 44 und der Raum 120 über den Tankkanal 68 mit dem Ablaufkanal 54 verbunden ist. In der (nicht dargestellten) Grundposition sperrt die Umfangskante der Ringstirnfläche des Steuerbundes 108 die Verbindung zwischen den beiden Räumen 116, 118 ab, während der rechte Steuerbund 110 die Verbindung vom Raum 120 zum Raum 118 öffnet, so dass der Federraum 94 mit dem Rücklaufanschluss R verbunden ist.

Die Axialverschiebung des Ventilkörpers 106 des Druckminderventils 22 erfolgt über den Proportionalmagneten 34, dessen Stößel 122 an der rechten Stirnfläche des Steuerbundes 110 anliegt und dessen Hub in Abhängigkeit von dem Steuersignal der elektronischen Steuereinheit 30 erfolgt.

Bei der konkreten Lösung gemäß Figur 3 wurde auf die Regelfeder 70 verzichtet.

Die in Figur 3 dargestellte Lösung ist besonders kompakt, da das Druckminderventil 22 und das Anhängerbremsventil 20 koaxial zueinander angeordnet sind, wobei die Axialbohrung 112 der Ventilbuchse 114 des Druckminderventils 22 stirnseitig in dem Federraum 94 mündet, so dass die in Figur 3 linke Stirnfläche des Steuerbundes 108 des Ventilkörpers 106 direkt mit dem Druck im Federraum 94 beaufschlagt ist und keine Verbindungskanäle zwischen dem Federraum 94 und der zugeordneten Steuerseite des Druckminderventils 22 vorgesehen werden müssen. Ein weiterer Vorteil ist der nahezu symmetrische Aufbau des Ventilkörpers 106 mit den beiden außen liegenden Steuerbünden 108, 110 und der dazwischen liegenden Ringnut.

Das Prioritätsventil 24 hat eine Ventilbohrung 124, in der ein Ventilschieber 128 geführt ist. Dieser hat an seinem rechten Endabschnitt einen Bund 130, dessen Ringstirnfläche eine Steuerkante 132 ausbildet. An dem in Figur 3 linken Endabschnitt des Ventilschiebers 128 ist ein Führungsbund 134 ausgebildet. Die Ventilbohrung 24 ist zu zwei Druckräumen 136, 138 erweitert, wobei der Druckraum 136 über den Verbraucherkanal 57 mit dem Ringraum 80 und der Druckraum 138 mit dem Verbraucheranschluss E verbunden ist. Der Ventilschieber 128 ist durch die Druckfeder b in seine dargestellte Grundposition vorgespannt, in der der Führungsbund 134 an einem Anschlag anliegt und die Steuerkante 132 die Verbindung zwischen den beiden Druckräumen 136, 138 geschlossen hat. Der von der Stirnfläche des Führungsbundes 134 und der benachbarten Stirnfläche der Ventilbohrung 124 begrenzte Steuerraum 140 ist über den als Ventilschieberbohrung ausgeführten Steuerkanal 74 mit dem Druckraum 136 verbunden, so dass der Druck im Pumpenkanal 56 auf die linke Stirnfläche des Führungsbundes 134 wirkt. Ein die Feder b aufnehmender Federraum 142 ist über eine Leitung 144 mit dem Druckraum 82 verbunden, in dem der Bremsdruck anliegt.

Die Funktion der in Figur 3 dargestellten Anhängerbremsventilanordnung wurde bereits anhand Figur 2 erläutert, so dass diesbezügliche Ausführungen entbehrlich sind.

Wie eingangs erwähnt, ist das beschriebene System als Closed-Center-LS-System ausgeführt. Prinzipiell ist es jedoch auch möglich, die erfindungsgemäße Konstruktion bei einem Open-Center-System anzuwenden.

Offenbart ist eine hydraulische Anhängerbremseinrichtung mit einem Anhängerbremsventil zum Beaufschlagen einer Anhängerbremse mit einem Bremsdruck in Abhängigkeit von einem Zugfahrzeugbremsdruck. Erfindungsgemäß hat die Anhängerbremseinrichtung eine elektronische Steuereinheit, über die ein dem Zugfahrzeugbremsdruck entsprechendes Drucksignal in ein Steuersignal zur Ansteuerung des Anhängerbremsventils umwandelbar ist.

### Bezugszeichenliste:

- 1: Anhängerbremseinrichtung
- 2: Verstellpumpe
- 4: Achse
- 6: Achse
- 8: Bremsbacken
- 10: Bremszylinder
- 12: Hebelmechanismus
- 14: Bremszylinder
- 16: Bremsleitung
- 18: Anhängerbremsventilanordnung
- 20: Anhängerbremsventil
- 22: Druckminderventil
- 24: Prioritätsventil
- 26: Wechselventilanordnung
- 28: LS-Leitung
- 30: elektronische Steuereinheit
- 32: Signalleitung
- 34: Proportionalmagnet
- 36: Bremspedal
- 38: Bremsdruckgeber
- 40: Bremszylinder
- 42: Bremsen
- 44: Drucksensor
- 46: Drucksignalleitung
- 48: Steuerschieber
- 54: Ablaufkanal
- 56: Pumpenkanal
- 57: Verbraucherkanal
- 58: Bremskanal
- 60: Düse
- 62: Dämpfungsdrossel
- 64: Stirnfläche
- 66: Steuerdruckkanal
- 67: Steuerkanal
- 68: Tankkanal
- 70: Regelfeder
- 72: Dämpfungsdrossel
- 74: Steuerkanal
- 76: Ventilscheibe
- 78: Ventilbohrung
- 80: Ringraum
- 82: Ringraum
- 84: Ringraum
- 86: Ringbund
- 88: Ringbund
- 90: Axialvorsprung
- 92: Steuerraum
- 94: Federraum
- 96: Steuerkante
- 98: Steuerkante
- 100: Ringstirnfläche
- 102: Winkelbohrung
- 104: Stirnflächenraum
- 106: Ventilkörper
- 108: Steuerbund
- 110: Steuerbund
- 112: Axialbohrung
- 114: Ventilbuchse
- 116: Raum
- 118: Raum
- 120: Raum
- 122: Stößel
- 124: Ventilbohrung
- 128: Ventilschieber
- 130: Bund
- 132: Ringstirnfläche
- 134: Führungsbund
- 136: Druckraum
- 138: Druckraum
- 140: Steuerraum
- 142: Federraum
- 144: Leitung

## Patentansprüche

1. Hydraulische Anhängerbremseinrichtung mit einem Anhängerbremsventil (20) zum Beaufschlagen einer Anhängerbremse mit einem Bremsdruck, das einen mit einer Pumpe (2) verbundenen Druckanschluss (P), einen mit einem Tank verbundenen Rücklaufanschluss (R) und einen Bremsanschluss (B) hat, wobei die Ansteuerung des Anhängerbremsventils (20) in Abhängigkeit von einem Zugfahrzeugbremsdruck erfolgt, **gekennzeichnet durch** eine elektronische Steuereinheit (30), über die ein dem Zugfahrzeugbremsdruck entsprechendes Drucksignal in ein Steuersignal zur Ansteuerung des Anhängerbremsventils (20) umwandelbar ist.

2. Anhängerbremseinrichtung nach Patentanspruch 1, wobei eine Steuerfläche eines Steuerschiebers (48) des Anhängerbremsventils (20) mit einem Steuerdruck beaufschlagbar ist, der am Arbeitsanschluss (A) eines elektrisch angesteuerten Druckminderventils (22) abgegriffen ist, über das ein an seinem Druckanschluss (P) anliegender Steueröldruck in Abhängigkeit von dem Steuersignal auf den Steuerdruck reduzierbar ist.

3. Anhängerbremseinrichtung nach Patentanspruch 2, wobei der Steuerschieber (48) in Bremsdruckaufbaurichtung mittelbar oder unmittelbar vom Steuerdruck und/oder von der Kraft einer Feder (a) und in Bremsdruckabsenkrichtung von dem Bremsdruck beaufschlagt ist.

4. Anhängerbremseinrichtung nach Patentanspruch 3, wobei der Steuerdruck die Vorspannung der Feder (a) bestimmt.

5. Anhängerbremseinrichtung nach Patentanspruch 3 oder 4, wobei der Bremsdruck auf eine Stirnfläche (64) mit kleinerem Querschnitt als die in Bremsdruckaufbaurichtung wirksame Steuerfläche des Steuerschiebers (48) wirkt.

6. Anhängerbremseinrichtung nach einem der vorhergehenden Patentansprüche, wobei dem Anhängerbremsventil (20) ein Prioritätsventil (24) zum bevorzugten Versorgen des Anhängerbremsventils (20) mit Druckmittel zugeordnet ist.

7. Anhängerbremseinrichtung nach einem der vorhergehenden Patentansprüche, mit einer Einrichtung zum Erfassen der Anhängerlast und zum Abgeben eines Lastsignals an die elektronische Steuereinheit (30), über die das Steuersignal in Abhängigkeit von dieser Last veränderbar ist.

8. Anhängerbremseinrichtung nach einem der vorhergehenden Patentansprüche, wobei die elektronische Steuereinheit (30) derart ausgebildet ist, dass sie bei abgehängtem Anhänger ein Steuersignal zum selbsttätigen Einrücken der Anhängerbremse abgibt.

9. Anhängerbremseinrichtung nach einem der vorhergehenden Patentansprüche, mit einer Einrichtung, über die das Steuersignal veränderbar ist, wenn ein Anhänger an ein Zugfahrzeug angehängt oder von diesem abgehängt ist.

10. Anhängerbremseinrichtung nach einem der Patentansprüche 2 bis 9, wobei das Druckminderventil (22) koaxial zum Anhängerbremsventil (20) angeordnet ist und mit einer Ventilbuchse (114) einen stirnseitigen Abschluss eines Federraums (94) des Anhängerbremsventils (20) bildet, so dass ein Ventilkörper (106) des Druckminderventils (22) stirnseitig mit dem Druck im Federraum (94)beaufschlagt ist.

## Claims

1. Hydraulic trailer brake device having a trailer brake valve (20) for applying brake pressure to a trailer brake, which trailer brake valve (20) has a pressure connection (P) connected to a pump (2), a return connection (R) connected to a tank, and a brake connection (B), wherein actuation of the trailer brake valve (20) takes place in dependence upon the brake pressure of a towing vehicle, **characterised by** an electronic control unit (30) by means of which a pressure signal corresponding to the brake pressure of the towing vehicle can be converted into a control signal for actuating the trailer brake valve (20).

2. Trailer brake device according to patent claim 1, wherein a control surface of a control slide (48) of the trailer brake valve (20) can be acted upon by a control pressure tapped from the working connection (A) of an electrically actuated pressure reduction valve (22), by means of which a control oil pressure applied to its pressure connection (P) can be reduced to the control pressure in dependence upon the control signal.

3. Trailer brake device according to patent claim 2, wherein the control slide (48) is directly or indirectly acted upon in the direction of brake pressure build-up by control pressure and/or by the force of a spring (a) and is acted upon in the direction of pressure reduction by the brake pressure.

4. Trailer brake device according to patent claim 3, wherein the control pressure determines the pre-loading of the spring (a).

5. Trailer brake device according to patent claim 3 or 4, wherein the brake pressure acts on an end face (64) of smaller cross-section than that of the control surface of the control slide (48) acting in the direction of brake pressure build-up.

6. Trailer brake device according to any one of the preceding patent claims, wherein the trailer brake valve (20) has associated with it a priority valve (24) for preferentially supplying the trailer brake valve (20) with pressure medium.

7. Trailer brake device according to any one of the preceding patent claims, having a device for detecting the trailer load and for outputting a load signal to the electronic control unit (30) by means of which the control signal can be altered in dependence upon that load.

8. Trailer brake device according to any one of the preceding patent claims, wherein the electronic control unit (30) is constructed in such a manner that it outputs a control signal for automatic engagement of the trailer brake when the trailer is uncoupled.

9. Trailer brake device according to any one of the preceding patent claims, having a device by means of which the control signal can be altered when a trailer is coupled to or uncoupled from a towing vehicle.

10. Trailer brake device according to any one of patent claims 2 to 9, wherein the pressure reduction valve (22) is arranged coaxially with the trailer brake valve (20) and forms, with a valve bushing (114), an end boundary of a spring chamber (94) of the trailer brake valve (20), so that a valve body (106) of the pressure reduction valve (22) is acted upon at its end face by the pressure in the spring chamber (94).

## Revendications

1. Dispositif hydraulique de frein de remorque équipé d'une soupape de frein de remorque (20) pour alimenter un frein de remorque en pression de freinage qui possède un raccordement de pression (P) relié à une pompe (2), un raccordement de retour (R) relié à un réservoir et un raccordement de frein (B), le réglage de la soupape de frein de remorque (20) s'effectuant en fonction d'une pression de freinage d'un véhicule tracteur, **caractérisé par** l'unité de réglage électronique (30) grâce à laquelle un signal de pression correspondant à la pression de freinage d'un véhicule tracteur peut être converti en un signal de réglage permettant de réguler la soupape de frein de remorque (20).

2. Dispositif de frein de remorque selon la revendication 1, dans lequel une surface de réglage d'une soupape-pilote (48) de la soupape de frein de remorque (20) peut être alimentée en pression de réglage, prélevée au niveau du raccordement de travail (A) d'une soupape de réduction de la pression (22) régulée de manière électrique et grâce à laquelle une pression de l'huile de réglage au niveau de son raccordement de pression (P) peut être réduite en fonction du signal de réglage sur la pression de réglage.

3. Dispositif de frein de remorque selon la revendication 2, dans lequel la soupape-pilote (48) peut être alimentée dans, en cas d'augmentation de la pression de freinage, directement ou indirectement à partir de la pression de réglage et/ou de la force d'un ressort (a) et, en cas de réduction de la pression de freinage, à partir de la pression de freinage.

4. Dispositif de frein de remorque selon la revendication 3, dans lequel la pression de réglage détermine la prétension du ressort (a).

5. Dispositif de frein de remorque selon la revendication 3 ou 4, dans lequel la pression de freinage agit sur une surface de contact (64) d'une coupe transversale inférieure à la surface de réglage de la soupape-pilote (48) utilisée lors d'une augmentation de la pression de freinage.

6. Dispositif de frein de remorque selon l'une quelconque des revendications précédentes, dans lequel une soupape de priorité (24) est affectée à la soupape de frein de remorque (20) pour alimenter de préférence la soupape de frein de remorque (20) en pression.

7. Dispositif de frein de remorque selon l'une quelconque des revendications précédentes, équipé d'un dispositif permettant de saisir la charge de la remorque et d'émettre un signal de charge au niveau de l'unité de réglage électronique (30) grâce à laquelle le signal de réglage peut être modifié en fonction de cette charge.

8. Dispositif de frein de remorque selon l'une quelconque des revendications précédentes, dans lequel l'unité de réglage électronique (30) est conçue de telle sorte qu'elle émet un signal de réglage lorsque la remorque est détachée pour que les freins de la remorque s'engrènent automatiquement.

9. Dispositif de frein de remorque selon l'une quelconque des revendications précédentes, équipé d'un dispositif grâce auquel le signal de réglage peut être modifié lorsqu'une remorque est attachée à un véhicule tracteur ou est détachée de ce véhicule.

10. Dispositif de frein de remorque selon l'une des revendications 2 à 9 dans lequel la soupape de réduction de la pression (22) est placée de manière coaxiale par rapport à la soupape de frein de remorque (20) et formant, avec un boîtier de soupape (114) , une limite frontale d'un espace de ressort (94) de la soupape de frein de remorque (20) de telle sorte qu'un corps de soupape (106) de la soupape de réduction de la pression (22) est alimenté du côté frontal avec la pression régnant dans l'espace de ressort (94).
